(19) 

Europäisches
Patentamt
European
Patent Office
Office européen
des brevets

(11) **EP 4 383 376 A1**

(12) **EUROPEAN PATENT APPLICATION**
published in accordance with Art. 153(4) EPC

(43) Date of publication:
**12.06.2024 Bulletin 2024/24**

(21) Application number: **22956696.3**

(22) Date of filing: **13.10.2022**

(51) International Patent Classification (IPC):
***H01M 4/64*** (2006.01)          ***H01M 4/66*** (2006.01)

(86) International application number:
**PCT/CN2022/125062**

(87) International publication number:
**WO 2024/077543 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **HUANG, Jiantao
Ningde, Fujian 352100 (CN)**

• **SUN, Xin
Ningde, Fujian 352100 (CN)**
• **LIU, Huanji
Ningde, Fujian 352100 (CN)**
• **CHEN, Xiao
Ningde, Fujian 352100 (CN)**
• **JIN, Haizu
Ningde, Fujian 352100 (CN)**

(74) Representative: **Kraus & Lederer PartGmbB
Thomas-Wimmer-Ring 15
80539 München (DE)**

(54) **ELECTRODE ASSEMBLY, SECONDARY BATTERY, BATTERY PACK, AND ELECTRIC
APPARATUS**

(57)     An electrode assembly (1), a secondary battery (10), a battery pack (100), and an electrical apparatus. In the electrode assembly (1), there are several electrode plate portions (11) sequentially arranged in a laminated manner along its own thickness direction (X). During structural design, the current collector (111) in at least one of the electrode plate portions (11) is configured as a barrier (112), and by controlling the ratio between the thermal conductivity $\lambda 0$ of the barrier (112) and the thickness d0 of the barrier (112) to be less than $3 \times 10^7$ W/(K*m$^2$), the heat flux density of the barrier (112) along the thickness direction (X) of the electrode assembly (1) is reduced and the thermal resistance is increased, thus forming an effective thermal barrier in the thickness direction (X) of the electrode assembly (1).

**FIG. 4**

**EP 4 383 376 A1**

**Description**

**TECHNICAL FIELD**

The present application relates to the technical field of secondary batteries, and in particular to an electrode assembly, a secondary battery, a battery pack, and an electrical apparatus.

**BACKGROUND ART**

The electrode assembly is the component in the secondary battery in which the electrochemical reaction occurs, and is formed mainly by the winding or laminated placement of a positive electrode plate and a negative electrode plate, and is usually provided with a separator between the negative electrode plate and the positive electrode plate.

When abuse occurs within the secondary battery, such as mechanical abuse, electrical abuse, thermal abuse, etc., it can lead to failure at a local position of the electrode assembly, and result in heat accumulation, which causes the heat to spread easily, thus causing a series of thermal runaway risks.

**SUMMARY OF THE INVENTION**

On this basis, there is a need to provide an electrode assembly, a secondary battery, a battery pack, and an electrical apparatus to form an effective thermal barrier, thus reducing the risk of heat spreading of the secondary battery.

In a first aspect, the present application provides an electrode assembly, comprising: several electrode plate portions sequentially arranged in a laminated manner along a thickness direction of the electrode assembly, each of the electrode plate portions comprising a current collector; and an insulating portion, the insulating portion being arranged between any adjacent two of the electrode plate portions, wherein at least one said current collector is configured as a barrier, the thermal conductivity of the barrier in the thickness direction of the electrode assembly being denoted as $\lambda0$, and the thickness of the barrier being denoted as d0, with $\lambda0/d0 < 3 \times 10^7$ watts per square meter Kelvin (W/(K*m$^2$)).

The electrode assembly described above has several electrode plate portions sequentially arranged in a laminated manner in its own thickness direction. During structural design, the current collector in at least one of the electrode plate portions is configured as a barrier, and by controlling the ratio between the thermal conductivity $\lambda0$ of the barrier and the thickness d0 of the barrier to be less than $3 \times 10^7$ W/(K*m$^2$), the heat flux density of the barrier along the thickness direction of the electrode assembly is reduced and the thermal resistance is increased, thus forming an effective thermal barrier in the thickness direction of the electrode assembly. At this time, if a thermal failure occurs at a position on one side of the barrier, the barrier can effectively prevent the rapid transfer of heat to the other side of the barrier, which indirectly slows down the rapid conversion of the capacity of the active material into heat and its dissipation, thereby reducing the risk of heat spreading of the secondary battery.

In some embodiments, the thermal conductivity $\lambda0$ of the barrier and the thickness d0 of the barrier further satisfy the condition: $\lambda0 \times d0 < 0.003$ watts per Kelvin (W/K). In this manner, by controlling the product of $\lambda0$ and d0 to be below 0.003 W/K, the thickness of the barrier is prevented from being too large to cause a decrease in the energy density of the electrode plate portion, thereby enabling the electrode plate portion having the barrier to balance the low thermal conductivity property and the high energy density.

In some embodiments, $\lambda0 \times d0 < 0.001$ W/K. In this way, the range of values of the product of $\lambda0$ and d0 is further limited and narrowed, which facilitates the reduction of the value of the thermal conductivity of the barrier and, at the same time, is more conducive to ensuring the energy density of the electrode plate portion.

In some embodiments, the thermal conductivity $\lambda0$ of the barrier and the thickness d0 of the barrier further satisfy the condition: $\lambda0/d0 < 1 \times 10^7$ W/(K*m$^2$). In this way, the range of the ratio of $\lambda0$ to d0 is further limited and narrowed, which facilitates the reduction of the value of the thermal conductivity of the barrier, thus achieving the effect of difficulty in spreading.

In some embodiments, the material of the barrier comprises at least one of bronze, iron, stainless steel, or tin. In this way, the material of the barrier is selected from at least one of bronze, iron, stainless steel, or tin, which can effectively reduce the heat spreading properties and further reduce the risk of thermal runaway.

In some embodiments, the thickness d0 of the barrier satisfies the condition: 3 microns ($\mu$m) $\leq$ d0 $\leq$ 20 $\mu$m. In this way, the thickness d0 of the barrier is reasonably controlled to be between 3 $\mu$m and 20 $\mu$m, so that the secondary battery can balance the low heat spreading properties and the high energy density.

In some embodiments, the thickness d0 of the barrier further satisfies the condition: 3 $\mu$m $\leq$ d0 $\leq$ 10 $\mu$m. In this way, the range of values of the thickness d0 of the barrier is further limited and narrowed, so that the secondary battery can better balance the low heat spreading properties and the high energy density.

In some embodiments, the barrier comprises at least one main body layer, the thermal conductivity of the main body layer in the thickness direction of the electrode assembly being denoted as $\lambda1$, and the thickness of the main body layer being denoted as d1, with $\lambda 1/$ d1 $<1 \times 10^7$ W/(K*m$^2$), and with the sum of the thicknesses d1 of all the main body layers being less than or equal to d0. In this way, the range of the ratio of $\lambda 1$ to d1 of the main body layer is limited to below $1 \times 10^7$ W/(K*m$^2$), which facilitates the reduction of the value of the thermal conductivity of the barrier, thus achieving the effect of difficulty in spreading.

In some embodiments, the barrier further comprises an auxiliary layer stacked on at least one side face of the main body layer, the thermal conductivity of the auxiliary layer in the thickness direction of the electrode assembly being denoted as $\lambda 2$, with the thermal conductivity $\lambda 1$ and the thermal conductivity $\lambda 2$ satisfying the condition: $\lambda 2 < \lambda 1$. In this way, the auxiliary layer is provided on the main body layer to form a composite barrier, which can further reduce the overall thickness of the barrier under the premise of ensuring a low thermal conductivity, thus enhancing the energy density of the secondary battery.

In some embodiments, the elasticity modulus of the barrier is denoted as E0, E0$\times$d0$\geq$500 Gigapascal microns (GPa*$\mu$m). This is designed to improve the puncture resistance capability of the secondary battery, which serves to reduce the risk of puncture and further improve the safety of the secondary battery.

In some embodiments, among all the electrode plate portions, for an electrode plate portion having the barrier, there is stacked at least one electrode plate portion not having the barrier on each of two opposite sides in the thickness direction of the electrode assembly. This is designed to provide a resistance to heat transfer, which results in a slower temperature rise on the other side of the same battery cell, thus slowing down the speed of heat spreading; and at the same time, it also prolongs the time it takes for the temperature to reach its maximum value, which makes the adjacent secondary batteries less susceptible to thermal runaway.

In some embodiments, at least two said current collectors are configured as the barriers, and there is stacked at least one electrode plate portion not having the barrier between two adjacent electrode plate portions both having the barrier. This is designed to achieve effective thermal resistance to different failure points, thus making it difficult for heat to spread effectively.

In some embodiments, each of the electrode plate portions further comprises an active layer, the active layer being disposed on at least one side face of the current collector. In this way, the active layer is provided on the current collector to ensure the capacity of the active material of the electrode assembly.

In a second aspect, the present application provides a secondary battery, comprising an electrode assembly of any one of the above.

In a third aspect, the present application provides a battery pack, comprising a secondary battery as described above.

In a fourth aspect, the present application provides an electrical apparatus, comprising a battery pack as described above, the battery pack being used to provide electrical energy.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

## DESCRIPTION OF DRAWINGS

Various other advantages and benefits will become apparent to those of ordinary skill in the art upon reading the following detailed description of the preferred implementations. The drawings are for the purpose of illustrating the preferred implementations only and are not to be considered a limitation to the present application. Moreover, in all of the accompanying drawings, the same parts are indicated by the same reference numerals. In the drawings:

Fig. 1 is a structural schematic diagram of a vehicle provided by some embodiments of the present application;
Fig. 2 is an exploded view of a battery pack provided by some embodiments of the present application;
Fig. 3 is an exploded structural schematic diagram of a secondary battery provided by some embodiments of the present application;
Fig. 4 is a structural cross-sectional view of an electrode assembly provided by some embodiments of the present application;
Fig. 5 is a curvilinear relationship diagram between the thermal conductivity of a barrier and the thickness of the barrier provided by some embodiments of the present application;
Fig. 6 is a structural schematic diagram I of the barrier provided by some embodiments of the present application;
Fig. 7 is a structural schematic diagram II of the barrier provided by some embodiments of the present application;
Fig. 8 is a structural schematic diagram I of two adjacent secondary batteries provided by some embodiments of the present application; and
Fig. 9 is a structural schematic diagram II of two adjacent secondary batteries provided by some embodiments of the present application.

1000, vehicle; 100, battery pack; 200, controller; 300, motor; 10, secondary battery; 20, box; 201, first portion; 202, second portion; 1, electrode assembly; 2, end cover; 3, case; 4, tab; 11, electrode plate portion; 111, current collector; 112, barrier; 1121, main body layer; 1122, auxiliary layer; 113, active layer; 12, insulating portion; X, thickness direction.

## DETAILED DESCRIPTION

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "comprise/include" and "have" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc., are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The applicant notes that mechanical abuse, electrical abuse, thermal abuse, and other abuse situations can all lead to local short circuits within the secondary battery, and if the secondary battery is at this time under the condition of high SOC (State of Charge, or also called the remaining battery capacity) without any protection measures, the electrical energy stored at the position where the short circuit occurs will be quickly converted into heat and dramatically released in a short period of time. The released heat spreads rapidly along the thickness direction of the electrode assembly and, in the case of a single secondary battery level, the released heat spreads to the unfailed electrode plates, which leads to the failure of the decomposition of that active material, thus generating new heat, which in turn leads to thermal runaway of the entire secondary battery. As for the battery pack level, the runaway secondary battery will easily spread the heat to the neighboring secondary batteries and fail, which leads to a series of thermal runaway risks.

Based on this, in order to address the risk of easy heat spreading of the secondary battery due to failure at a local position of the electrode assembly in an abuse situation, the applicant, after in-depth research, has designed an electrode assembly in which in at least one electrode plate portion, the current collector is configured as a barrier, wherein the barrier has a thermal conductivity of $\lambda 0$ in the thickness direction of the electrode assembly, and the barrier has a thickness of d0, which satisfy the following condition : $\lambda 0/d0 < 3 \times 10^7$ W/(K*m$^2$).

During structural design, the current collector in at least one of the electrode plate portions is configured as a barrier, and by controlling the ratio between the thermal conductivity $\lambda 0$ of the barrier and the thickness d0 of the barrier to be less than $3 \times 10^7$ W/(K*m$^2$), the heat flux density of the barrier along the thickness direction of the electrode assembly is reduced and the thermal resistance is increased, thus forming an effective thermal barrier in the thickness direction of the electrode assembly. At this time, if a thermal failure occurs at a position on one side of the barrier, the barrier can effectively prevent the rapid transfer of heat to the other side of the barrier, which indirectly slows down the rapid conversion of the capacity of the active material into heat and its dissipation, and prolongs the time of failure of the entire secondary battery, thereby reducing the risk of heat spreading of the secondary battery.

At the same time, considering from the battery pack level, configuring at least one current collector as the barrier can isolate a large portion of the heat from the failed secondary battery, so that the heat transferred from the failed secondary battery to the neighboring secondary batteries can not reach the critical temperature, and thus the neighboring secondary batteries are not affected by the heat spreading.

In addition, the heat blocked by the barrier will accumulate sharply at the runaway position, causing one side of the barrier to heat up rapidly, which makes the condition of triggering the start-up of the safety and explosion-proof structure, such as the explosion-proof valve mechanism, be reached in advance, so that the safety design of the secondary battery is made to be triggered actively at a small failure SOC, thus further reducing the risk of heat spreading of the secondary battery cell.

Here, the mechanical abuse refers to the situation that is generally caused by mechanical deformation of the secondary battery due to exposure to force, such as manifested in a vehicle collision, and post-collision extrusion and pinprick, and so on. The electrical abuse refers to accidents generally caused by improper voltage management of the secondary battery, component abnormalities, particles in the manufacturing process, and so on, comprising short circuits, overcharging, and so on. The thermal abuse refers to overheating generally caused by improper temperature management.

Thermal runaway of a secondary battery refers to the successive thermal decomposition reaction of the active materials inside the battery, as a result of which the internal temperature of the secondary battery rises irreversibly and rapidly, the side reaction on the negative electrode plate increases, the SEI (Solid Electrolyte Interphase) film decomposes or reacts, and the electrolyte solution produces gas at the lithium plating position of the negative electrode plate. The separator shrinks as a result of the temperature, causing the positive and negative electrode plates to get in short connection, so that a large amount of Joule heat inside the secondary battery consumes the capacity of the active material, which leads to a further increase in temperature, decomposition of the positive electrode plate and production of oxygen, thus leading to a mixture of gases from both reducing and oxidizing atmospheres. Induced by the temperature, there will be violent reactions, open valves spraying liquid or even fire. The secondary battery releases a sharp increase in temperature over a short period of time, thus triggering thermal runaway in neighboring battery cells, and this chain reaction continues until all battery cells fail.

The secondary battery disclosed in the embodiments of the present application can be used, but not limited to, in an electrical apparatus such as a vehicle, a ship, or an aircraft. The secondary battery and the battery pack and the like disclosed in the present application can be used to form a power supply system of the electrical apparatus, which facilitates mitigating and automatically regulating the deterioration of the expansion force of the battery cell and replenishing the consumption of the electrolyte solution, thereby enhancing the stability of the performance and the life of the battery pack.

Examples of the present application provide an electrical apparatus that uses a battery pack as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may comprise fixed or mobile electric toys, such as game consoles, electric car toys, electric ship toys, electric airplane toys, and the like. The spacecraft may comprise airplanes, rockets, space shuttles, spaceships, and the like.

For the convenience of description, the following embodiments are illustrated with an example in which the electrical apparatus according to an embodiment of the present application is a vehicle 1000.

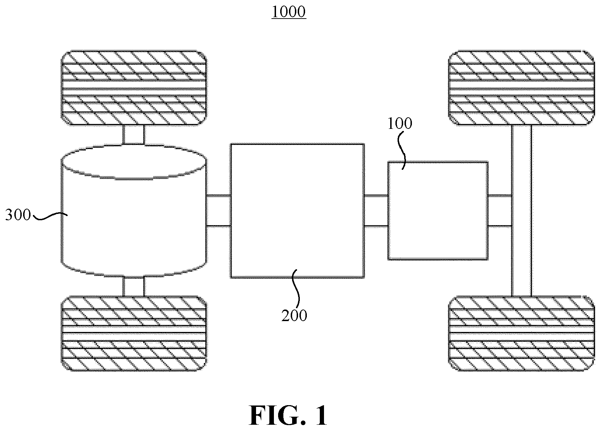

Please refer to Fig. 1, Fig. 1 is a structural schematic diagram of a vehicle 1000 provided by some embodiments of the present application. The vehicle 1000 may be a fuel vehicle, a gas vehicle or a new energy vehicle, and the new energy vehicle may be an all-electric vehicle, a hybrid vehicle or an extended range electric vehicle, etc. A battery pack 100 is provided inside the vehicle 1000, wherein the battery pack 100 may be provided at the bottom or the head or the tail of the vehicle 1000. The battery pack 100 may be used to power the vehicle 1000. For example, the battery pack 100 may be used as an operating power source for the vehicle 1000. The vehicle 1000 may further comprise a controller 200 and a motor 300, wherein the controller 200 is used to control the battery pack 100 to power the motor 300, for example, for the operating power demand when the vehicle 1000 is starting, navigating and driving.

In some embodiments of the present application, the battery pack 100 not only can serve as an operating power source of the vehicle 1000, but also can serve as a driving power source of the vehicle 1000, thus replacing or partially replacing fuel or natural gas to provide driving power for the vehicle 1000.

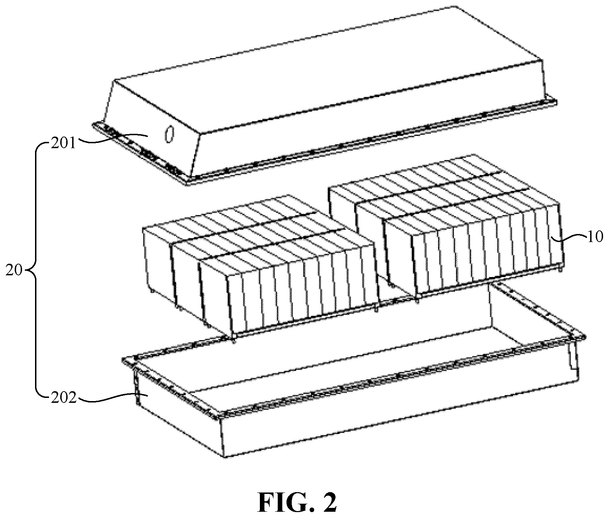

Please refer to Fig. 2, Fig. 2 is an exploded view of a battery pack 100 provided by some embodiments of the present application. The battery pack 100 comprises a box 20 and a secondary battery 10, the secondary battery 10 being accommodated within the box 20, wherein the box 20 is used to provide an accommodating space for the secondary battery 10, and the box 20 may be in a variety of structures. In some embodiments, the box 20 may comprise a first portion 201 and a second portion 202, wherein the first portion 201 and the second portion 202 cover each other, and the first portion 201 and the second portion 202 together define the accommodating space for accommodating the secondary battery 10. The second portion 202 may be of a hollow structure with an opening at one end, and the first portion 201 may be of a plate-like structure, wherein the first portion 201 is capped on the opening side of the second portion 202 so that the first portion 201 and the second portion 202 together define the accommodating space; and the first portion 201 and the second portion 202 may each be of a hollow structure with an opening at one end, wherein the opening side of the first portion 201 is capped on the opening side of the second portion 202. Of course, the box 20 formed by the first portion 201 and the second portion 202 may be of a variety of shapes, such as a cylinder, a rectangular solid, or the like.

In the battery pack 100, there may be a plurality of secondary batteries 10, and the plurality of secondary batteries 10 may be connected to each other in series or in parallel or in parallel-series connection, wherein the parallel-series connection means that the plurality of secondary batteries 10 are connected both in series and in parallel. The plurality of secondary batteries 10 can be directly connected in series or in parallel or in parallel-series connection together, and then the entirety composed of the plurality of secondary batteries 10 is accommodated in the box 20; and of course, the battery pack 100 can also be formed in such a way that the plurality of secondary batteries 10 are first connected in series or in parallel or in parallel-series connection to form a battery module form, and a plurality of battery modules are then connected in series or in parallel or in parallel-series connection to form a single whole and accommodated within the box 20. The battery pack 100 may also comprise other structures. For example, the battery pack 100 may also comprise a busbar for realizing an electrical connection between the plurality of secondary batteries 10.

Among other things, the secondary batteries 10 may be of cylinder, flat, rectangular, or other shapes, and so on.

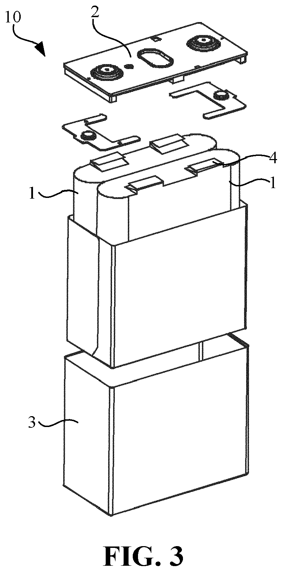

Please refer to Fig. 3. Fig. 3 is an exploded structural schematic diagram of the secondary battery 10 provided by some embodiments of the present application. The secondary battery 10 refers to the smallest unit that makes up the battery pack 100. As shown in Fig. 3, the secondary battery 10 comprises an end cover 2, a case 3, an electrode assembly 1, and other functional components.

The end cover 2 refers to a component that is capped over the opening of the case 3 to isolate the internal environment of the secondary battery 10 from the external environment. Without limitation, the shape of the end cover 2 can be adapted to the shape of the case 3 to fit the case 3. Optionally, the end cover 2 can be made of a material (such as aluminum alloy) with a certain hardness and strength, so that the end cover 2 is less likely to deform when subjected to extrusion and collision, which allows the secondary battery 10 to have a higher structural strength and improved safety performance. The end cover 2 can be provided with functional components such as electrode terminals. The electrode terminal can be used for electrical connection with the electrode assembly 1 for use in outputting or inputting electrical energy from or to the secondary battery 10. In some embodiments, the end cover 2 may also be provided with a pressure relief mechanism for releasing the internal pressure when the internal pressure or temperature of the secondary battery 10 reaches a threshold value. The end cover 2 may also be made of a variety of materials, such as copper, iron, aluminum, stainless steel, aluminum alloy, plastic, etc., and the embodiments of the present application are not particularly limited in this regard. In some embodiments, an insulating member may also be provided on the inner side of the end cover 2, and the insulating member can be used to isolate the electrical connection components inside the case 3 from the end cover 2 to reduce the risk of short circuit. As an example, the insulating member may be plastic, rubber, etc.

The case 3 is an assembly for fitting the end cover 2 to form the internal environment of the secondary battery 10, wherein the formed internal environment can be used to accommodate the electrode assembly 1, electrolyte solution, and other components. The case 3 and the end cover 2 may be separate components, and an opening may be provided in the case 3, and the internal environment of the secondary battery 10 may be formed by making the end cover 2 cover the opening at the opening. Without limitation, it is also possible to make the end cover 2 and the case 3 integrated.

Specifically, the end cover 2 and the case 3 may first form a common connecting face before the other components enter the case, and then the end cover 2 is made to cover the case 3 when the interior of the case 3 needs to be encapsulated. The case 3 may be of various shapes and various sizes, for example, rectangular solid shape, cylindrical shape, hexagonal shape, etc. Specifically, the shape of the case 3 may be determined based on the specific shape and size of the electrode assembly 1. The case 3 may be made of various materials, such as copper, iron, aluminum, stainless steel, aluminum alloy, and plastic, which is not particularly limited in the embodiments of the present application.

The electrode assembly 1 is a component in which an electrochemical reaction occurs in the secondary battery 10. The case 3 may contain one or more electrode assemblies 1 inside. The electrode assembly 1 is formed primarily by the winding or laminated placement of a positive electrode plate and a negative electrode plate, and is usually provided with a separator between the positive electrode plate and the negative electrode plate. The portions of the positive electrode plate and the negative electrode plate having an active material form a main body part of the electrode assembly 1, and the portions of the positive electrode plate and the negative electrode plate not having an active material each form a tab 4. The positive tab 4 and the negative tab 4 may be located together at one end of the main body part or at two ends of the main body part, respectively. During charging and discharging of the battery, the positive electrode active material and the negative electrode active material react with the electrolyte solution, and the tabs 4 are connected to the electrode terminals to form a current loop.

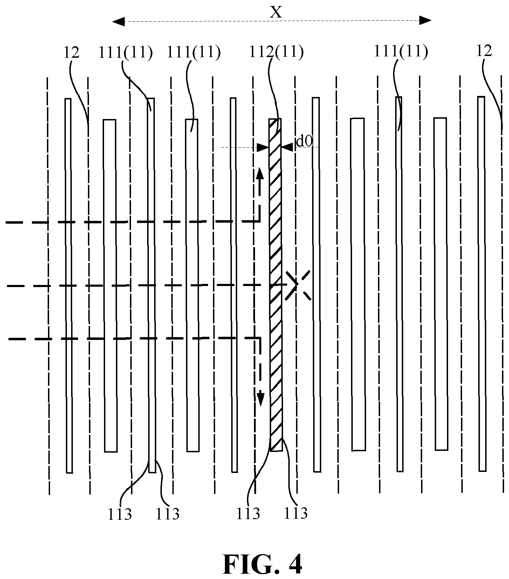

According to some embodiments of the present application, please refer to Fig. 4, the present application provides an electrode assembly 1. The electrode assembly 1 comprises: several electrode plate portions 11 and an insulating portion 12. The several electrode plate portions 11 are sequentially arranged in a laminated manner along a thickness direction X of the electrode assembly 1, each of the electrode plate portions 11 comprising a current collector 111. The insulating portion 12 is arranged between any adjacent two of the electrode plate portions 11. Among them, at least one current collector 111 is configured as a barrier 112, the thermal conductivity of the barrier 112 in the thickness direction X of the electrode assembly 1 is denoted as $\lambda 0$, and the thickness of the barrier 112 is denoted as d0, with $\lambda 0/d0 < 3 \times 10^7$ W/(K*m²).

There are at least two kinds of structures for the electrode assembly 1, wherein the first one is a stacking structure, which is formed by alternate laminating of several positive electrode plates, separators and negative electrode plates, and in this case, the electrode plate portion 11 is a complete positive electrode plate or negative electrode plate; and the second one is a winding structure, which is formed by the winding of positive electrode plates, separators and negative electrode plates placed in a sequential order, and in this case, the electrode plate portion 11 is a portion on the positive electrode plate or the negative electrode plate, such as, for instance: the electrode plate portion 11 is a large-surface structure or the like that is formed by the winding of positive electrode plates or negative electrode plates and provided in a multi-layered laminating manner.

For most two adjacent electrode plate portions 11, the polarities are kept opposite. For example, among the two adjacent electrode plate portions 11, the polarity of one of the electrode plate portions 11 is positive and the polarity of the other electrode plate portion 11 is negative. Of course, for the electrode assembly 1 of the winding structure, there may be a situation in which the negative electrode plate at the outermost ring is wound an additional 1 turn to 2 turns more, resulting in that the polarities of two adjacent electrode plate portions 11 at that place may remain the same.

The current collector 111 is a member or part that can not only carry active materials but also accumulate and output the current generated by the electrode active materials. The material of the current collector 111 can be chosen from a variety of options, for example: it can be, but is not limited to, copper, aluminum, nickel, stainless steel and other metal materials; of course, it can also be semiconductor materials such as carbon, as well as composite materials such as conductive resins, titanium-nickel shape memory alloys, carbon-coated aluminum foils, and so on.

The insulating portion 12 is a porous plastic film that ensures the free passage of lithium ions to form a loop while preventing the two electrodes from contacting each other to play an electronically insulating role. The type thereof may optionally be, but not limited to, a polyethylene monolayer film, a polypropylene monolayer film, and the like.

The barrier 112 is at least one of the plurality of current collectors 111 that is structured in such a way that the ratio between the thermal conductivity and the thickness thereof satisfies a certain range. Among them, the thermal conductivity is the amount of heat transferred through an area of 1 square meter in 1s for a 1m thick material with a temperature difference of 1K between two side faces. The way of measuring the specific thermal conductivity can be performed with reference to the standard ASTM D5470, and the value of this thermal conductivity is obtained with a thermal conductivity tester.

The number of barrier 112 may be one or a plurality. If the number of barrier 112 is a plurality, it is possible to greatly reduce the thermal conductivity property of the electrode assembly 1 along its own thickness direction X, thereby realizing the effect of difficult heat spreading. There are various distribution positions of the barrier 112 on the electrode assembly 1, for example: the barrier 112 may be located in the uppermost layer or the lowermost layer of the electrode assembly 1; or the barrier 112 may be located in one of the layers inside the electrode assembly 1, and so on. When the barrier 112 are located in one intermediate layer of the electrode assembly 1, for a single secondary battery 10, the barrier 112 can ensure that at least half of the active material is not subjected to a rapid temperature rise that could lead to thermal runaway. In addition, if the thermal management of the BMS (Battery Management System) is combined with the safety and explosion-proof structure design of the secondary battery 10, the start-up is triggered in advance, which can ensure that at least half of the SOC is not failed.

The ratio between the thermal conductivity of the barrier 112 and the thickness of the barrier 112 can be qualitatively understood as the heat flux density of the barrier 112, i.e., the heat energy passing through a unit area per unit time, for ease of understanding. The present application controls the ratio of the two to be less than $3 \times 10^7$, so that the heat flux density on the barrier 112 is below a critical value, thus reducing its thermal conductivity property.

The current collector 111 in at least one of the electrode plate portions 11 is configured as a barrier 112, and by controlling the ratio between the thermal conductivity $\lambda 0$ of the barrier 112 and the thickness d0 of the barrier 112 to be less than $3 \times 10^7$ W/(K*m$^2$), the heat flux density of the barrier 112 along the thickness direction X of the electrode assembly 1 is reduced and the thermal resistance is increased, thus forming an effective thermal barrier in the thickness direction X of the electrode assembly 1. At this time, if a thermal failure occurs at a position on one side of the barrier 112, the barrier 112 can effectively prevent the rapid transfer of heat to the other side of the barrier 112, which indirectly slows down the rapid conversion of the capacity of the active material into heat and its dissipation, thereby reducing the risk of heat spreading of the secondary battery 10.

According to some embodiments of the present application, please refer to Fig. 4, the thermal conductivity $\lambda 0$ of the barrier 112 and the thickness d0 of the barrier 112 further satisfy the condition: $\lambda 0 \times d0 < 0.003$ W/K.

From the inequation for the ratio between $\lambda 0$ and d0, it can be seen that the smaller $\lambda 0$ is and the greater d0 is, the more they satisfy the inequality and the lower the ratio obtained, which indicates that the barrier 112 has a lower heat flux density and is therefore less prone to heat transfer. However, for a greater d0, the space in the thickness direction X of the electrode plate portion 11 will be over-occupied, resulting in insufficient space reserved for the active material, which leads to a decrease in the energy density of the electrode plate portion 11 having the barrier 112. For this purpose, the present application adds a limitation on the range of the product of $\lambda 0$ and d0, wherein the d0 value is controlled to be within a reasonable range while decreasing $\lambda 0$, which can ensure that the barrier 112 has a low thermal conductivity property while ensuring that the electrode plate portion 11 has a high energy density.

The product of $\lambda 0$ and d0 can be taken to be any value less than 0.003 W/K, for example: the product of $\lambda 0$ and d0 can be, but is not limited to, 0.002 W/K, 0.001 W/K, 0.0009 W/K, 0.0005 W/K, and so on.

A multiplication operation is performed on the above two inequations, and the resulting inequation is: $(\lambda 0/d0) \times (\lambda 0 \times d0) < 3 \times 10^7 \times 0.003$. After collation, it can be seen that $\lambda 0 < 300$ watts per Kelvin meter (W/(K*m)), and at this point, the thermal conductivity of the barrier 112 can be controlled to be below 300 W/(K*m).

By controlling the product of $\lambda 0$ and d0 to be below 0.003 W/K, the thickness of the barrier 112 is prevented from being too large to cause a decrease in the energy density of the electrode plate portion 11, thereby enabling the electrode plate portion 11 having the barrier 112 to balance the low thermal conductivity property and the high energy density.

According to some embodiments of the present application, $\lambda 0 \times d0 < 0.001$ W/K.

The product of $\lambda 0$ and d0 may be taken to be any value less than 0.001 W/K, for example: the product of $\lambda 0$ and d0 can be, but is not limited to, 0.0009 W/K, 0.0007 W/K, 0.0005 W/K, 0.0003 W/K, 0.0001 W/K, and so on.

Similarly, the inequation in this embodiment is combined with the above inequation for the ratio between $\lambda 0$ and d0, then it can be seen that $\lambda 0 < 100\sqrt{3}$ W/(K*m), at which point the thermal conductivity of the barrier 112 can be controlled to be below $100\sqrt{3}$ W/(K*m).

The range of values of the product of $\lambda 0$ and d0 is further limited and narrowed, which facilitates the reduction of the value of the thermal conductivity of the barrier 112 and, at the same time, is more conducive to ensuring the energy density of the electrode plate portion 11.

According to some embodiments of the present application, the thermal conductivity $\lambda 0$ of the barrier 112 and the thickness d0 of the barrier 112 further satisfy the condition: $\lambda 0/d0 < 1 \times 10^7$ W/(K*m$^2$).

The ratio between $\lambda 0$ and d0 can qualitatively reflect the heat flux density of the barrier 112, and the present application controls the ratio between $\lambda 0$ and d0 to be below $1 \times 10^7$ W/(K*m$^2$), so as to control the heat flux density of the barrier 112 to be lower, thus enabling the risk of heat spreading to be reduced to a lower level.

When $\lambda 0/d0 < 1 \times 10^7$ W/(K*m$^2$) indicates that the temperature difference between the two sides of the barrier 112 is 100°C (100 K), the heat flux density along the thickness direction X of the barrier 112 is 1.0kW/mm$^2$. In other words, under a unit area of 1 mm$^2$, using the heat transfer of 1 Wh of characteristic electrical energy of a single-sided electrode plate, a 100°C temperature difference between the two sides requires 3.6 s, and a 200°C temperature difference between the two sides requires 1.8 s (which is 8.8 times that for a copper substrate of the same thickness, and 1.8 times that for an aluminum substrate of the same thickness), thus realizing an effective heat insulation.

$\lambda 0 \times d0 < 0.001$ W/K is used to constrain the energy density of the secondary battery 10. With a certain temperature difference, it is perfectly possible to increase the thickness of the current collector 111 to achieve a reduction of the heat transfer in the thickness direction X of the electrode plate, but this value cannot be arbitrarily large. For this reason, a boundary value of 0.001 W/K is set for $\lambda0 \times d0$.

Taking into account the inequations $\lambda0/d0 < 1\times10^7$ W/(K*m$^2$) and $\lambda0 \times d0 < 0.001$ W/K, it can be seen that $\lambda0 < 100$ W/(K*m). In this way, when designing the barrier 112, a material with a thermal conductivity below 100 may be selected.

The range of the ratio of $\lambda0$ to d0 is further limited and narrowed, which facilitates the reduction of the value of the thermal conductivity of the barrier 112, thus achieving the effect of difficulty in spreading.

According to some embodiments of the present application, the material of the barrier 112 comprises at least one of bronze, iron, stainless steel, or tin.

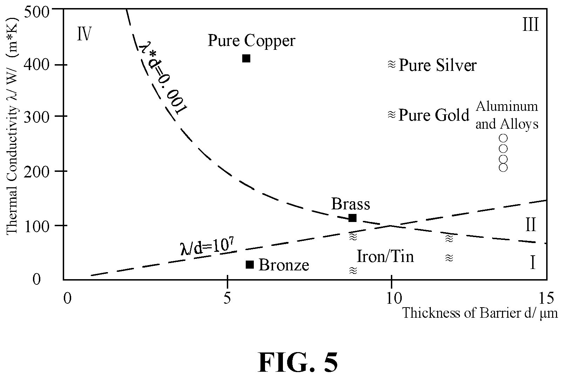

Curve plotting is performed for the two equations $\lambda0/d0=1\times10^7$ W/(K*m$^2$) and $\lambda0\times d0=0.001$W/K. Specifically, reference can be made to Fig. 5, wherein the curve plotted for X0/d0=1$\times10^7$ W/(K*m$^2$) is denoted as curve 1; and the curve plotted for X0$\times$d0=0.001W/K is denoted as curve 2. Curve 1 intersects with curve 2 to partition this region into region I, region II, region III, and region IV, wherein region I is located below the two curves to satisfy the demand for the values of $\lambda0/d0$ and $\lambda0\times d0$. Region 1 comprises at least bronze, iron, stainless steel, tin, and so on; therefore, the selection of at least one of bronze, iron, stainless steel, and tin can greatly satisfy the requirement of difficult spreadability.

When at least two of bronze, iron, stainless steel, and tin are selected simultaneously for the barrier 112, there are a variety of ways in which the barrier 112 is molded, for example: by pre-melting and mixing the at least two materials, and then performing ingot casting or die casting on the fused alloy material into the desired barrier 112; or by stacking plates of the two materials and extruding and laminating the at least two plates into the barrier 112 of the desired size by using extrusion equipment, and so on.

The material of the barrier 112 is selected from at least one of bronze, iron, stainless steel, or tin, which can effectively reduce the heat spreading properties and further reduce the risk of thermal runaway.

According to some embodiments of the present application, please refer to Fig. 4, the thickness d0 of the barrier 112 satisfies the condition: 3 $\mu$m $\leq$ d0 $\leq$ 20 $\mu$m.

The thickness of the barrier 112 has a certain influence on the heat transfer performance of the barrier 112, and the greater the thickness of the barrier 112, the higher the thermal resistance and the worse the heat transfer performance; on the other hand, the greater the thickness of the barrier 112, it will occupy the space on the electrode plate portion 11 along the thickness direction X of the electrode assembly 1, and then in the limited space inside the secondary battery 10, the thickness space for the coating of the active material is correspondingly reduced, which results in the reduction of the energy density of the secondary battery 10.

For this reason, the thickness d0 of the barrier 112 is controlled to be between 3 $\mu$m and 20 $\mu$m, for example: the thickness d0 of the barrier 112 may be, but is not limited to, 3 $\mu$m, 4 $\mu$m, 5 $\mu$m, 8 $\mu$m, 10 $\mu$m, 12 $\mu$m, 14 $\mu$m, 16 $\mu$m, 18 $\mu$m, 20 $\mu$m, and the like.

The thickness d0 of the barrier 112 is reasonably controlled to be between 3 $\mu$m and 20 $\mu$m, so that the secondary battery 10 can balance the low heat spreading properties and the high energy density.

According to some embodiments of the present application, the thickness d0 of the barrier 112 further satisfies the condition: 3 $\mu$m $\leq$ d0 $\leq$ 10 $\mu$m.

The thickness d0 of the barrier 112 is controlled to be between 3 $\mu$m and 10 $\mu$m, for example: the thickness d0 of the barrier 112 may be, but is not limited to, 3 $\mu$m, 4 $\mu$m, 5 $\mu$m, 6 $\mu$m, 7 $\mu$m, 8 $\mu$m, 9 $\mu$m, 10 $\mu$m, and the like.

The range of values of the thickness d0 of the barrier 112 is further limited and narrowed, so that the secondary battery 10 can better balance the low heat spreading properties and the high energy density.

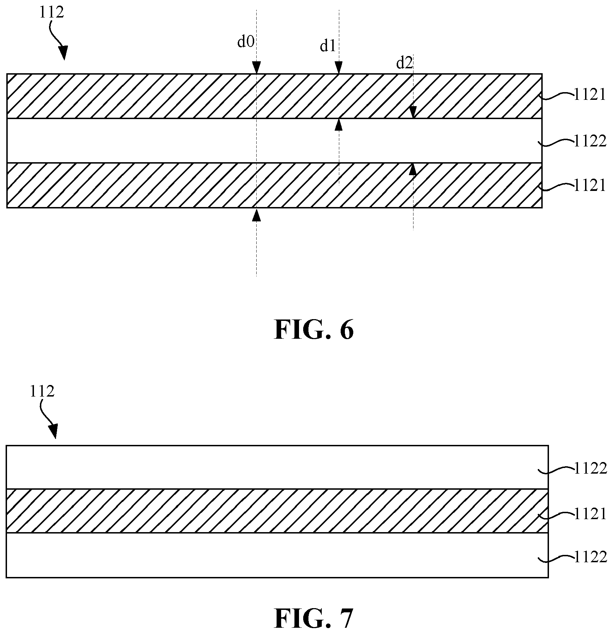

According to some embodiments of the present application, referring to Fig. 6, the barrier 112 comprises at least one main body layer 1121, the thermal conductivity of the main body layer 1121 in the thickness direction X of the electrode assembly 1 being denoted as $\lambda1$, and the thickness of the main body layer 1121 being denoted as d1, with $\lambda1/d1 <1\times10^7$ W/(K*m$^2$), and with the sum of the thicknesses d1 of all the main body layers 1121 being less than or equal to d0.

The main body layer 1121 is the main structure on the barrier 112 that constrains the spreading of heat along the thickness direction X of the electrode assembly 1. When the barrier 112 is a single substrate, the sum of all the main body layers 1121 is equivalent to the barrier 112, which means that $\lambda1$ is equal to $\lambda0$ and the sum of all the d1 is equal to d0; and when the barrier 112 is a multi-layered composite substrate, which means that the sum of all the d1 is less than d0, the main body layer 1121 realizes the dominant role in restraining heat spreading, and at this time, the ratio between the thermal conductivity $\lambda1$ of the main body layer 1121 and the thickness d1 is limited to be below $1\times10^7$ W/(K*m$^2$), so that the heat flux density of the barrier 112 is reduced, thus effectively suppressing heat spreading in the thickness direction X.

The single substrate means that the material in the barrier 112 is single, and the number of substrates is not limited, for example: the number of the main body layers 1121 may be one or a plurality. If the number of the main body layers 1121 is a plurality, all the main body layers 1121 may be arranged sequentially in a laminated manner.

The range of the ratio of $\lambda1$ to d1 of the main body layer 1121 is limited to below $1\times10^7$ W/(K*m$^2$), which

facilitates the reduction of the value of the thermal conductivity of the barrier 112, thus achieving the effect of difficulty in spreading.

According to some embodiments of the present application, please refer to Fig. 6, the barrier 112 further comprises an auxiliary layer 1122 stacked on at least one side face of the main body layer 1121. The thermal conductivity of the auxiliary layer 1122 in the thickness direction X of the electrode assembly 1 is denoted as $\lambda 2$. The thermal conductivity $\lambda 1$ and the thermal conductivity $\lambda 2$ satisfy the condition: $\lambda 2 < \lambda 1$.

The thermal conductivity $\lambda 2$ of the auxiliary layer 1122 is smaller than the thermal conductivity $\lambda 1$ of the main body layer 1121, which indicates that, with the same thickness, the thermal resistance realized by the auxiliary layer 1122 will be larger compared to the thermal resistance realized by the main body layer 1121.

In the process of designing the material of the barrier 112, if the barrier 112 is designed only using the main body layer 1121 that satisfies the condition that $\lambda 1/ d1 < 1 \times 10^7$ W/(K*m$^2$), this may result in the barrier 112 having difficulty in satisfying the product relationship that $\lambda 0 \times d0 < 0.001$ W/K, meaning that the designed barrier 112 has a larger thickness, which is contrary to the original intent of high energy density. To this end, the auxiliary layer 1122 may be utilized to replace part of the main body layer 1121. Since the auxiliary layer 1122 has a lower thermal conductivity, even if the thickness of the auxiliary layer 1122 is lower than the thickness of the replaced part of the main body layer 1121, the thermal resistance exhibited therein may still be greater than the thermal resistance of the corresponding main body layer 1121. For ease of understanding, reference may be made to the following formula:

$$R = i\frac{d1}{\lambda 1} + j\frac{d2}{\lambda 2} > \frac{d}{\lambda 1}$$

In the above formula, R is the thermal resistance of the barrier 112; i is the number of layers of the main body layer 1121; d1 is the thickness of the main body layer 1121; $\lambda 1$ is the thermal conductivity of the main body layer 1121; j is the number of layers of the main body layer 1121; d2 is the thickness of the main body layer 1121; $\lambda 2$ is the thermal conductivity of the main body layer 1121; and d is the total thickness of a single barrier 112 prior to its replacement by the auxiliary layer 1122, and its value will be greater than the thickness d0 (d0=i$\times$d1+j$\times$d2) of the composite barrier 112. Here, the material of the auxiliary layer 1122 may be, but is not limited to, a non-metal, a porous material, and the like.

If, while utilizing the main body layer 1121 for the condition of $\lambda 1/ d1 < 1 \times 10^7$ W/(K*m$^2$) to design the barrier 112, the product relationship of $\lambda 0 \times d0 < 0.001$ W/K can also be easily satisfied, which means that the designed thickness can be made very small, then at this time, the auxiliary layer 1122, in addition to serving the function of reducing the thickness and elevating the thermal resistance, also serves the function of other functional designs, for example: using the auxiliary layer 1122 to enhance the overall structural strength of the barrier 112, such as plating or depositing auxiliary materials such as tungsten carbide and hard chromium layers on the main body layer 1121.

For the number and distribution position between the auxiliary layer 1122 and the main body layer 1121, there may be a variety of designs, for example: please refer to Fig. 6, where one auxiliary layer 1122 is located between two main body layers 1121; or, please refer to Fig. 7, where one main body layer 1121 is located between two auxiliary layers 1122, and so on.

The auxiliary layer 1122 is provided on the main body layer 1121 to form a composite barrier 112, which can further reduce the overall thickness of the barrier 112 under the premise of ensuring a low thermal conductivity, thus enhancing the energy density of the secondary battery 10.

According to some embodiments of the present application, the elasticity modulus of the barrier 112 is denoted as E0, and E0$\times$d0$\geq$500 GPa*$\mu$m.

The elasticity modulus is a physical quantity that characterizes the elasticity of a material during the elastic deformation stage, where the stress and strain thereof are in a proportional relationship. The product of E0$\times$d0 is controlled to be above 500 GPa*$\mu$m, so as to consider the thickness of the barrier 112 while at the same time increasing the thickness of the barrier 112, thereby improving the puncture resistance capability of the secondary battery 10.

When designing the composite barrier 112, the elasticity modulus of the auxiliary layer 1122 may be increased, and during structural distribution, two auxiliary layers 1122 may be stacked on two opposite sides of the main body layer 1121, respectively.

This is designed to improve the puncture resistance capability of the secondary battery 10, which serves to reduce the risk of puncture and further improve the safety of the secondary battery 10.

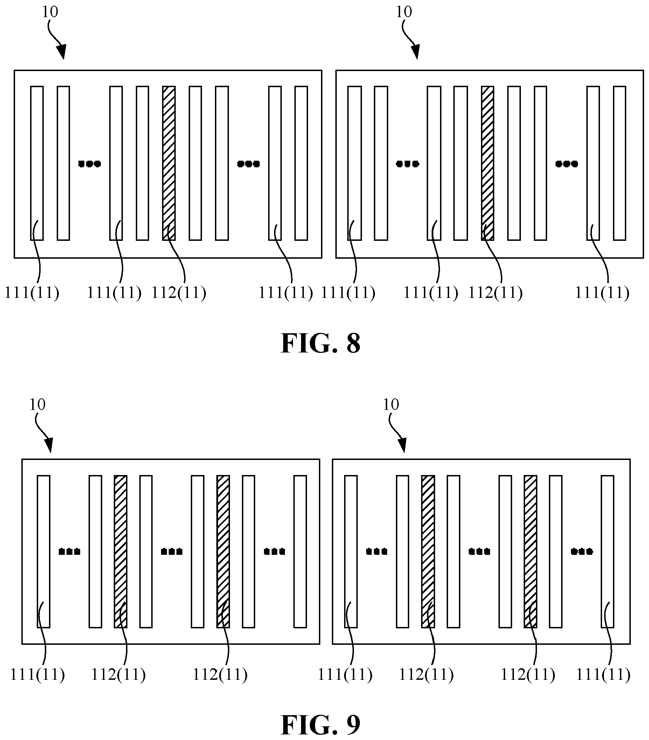

According to some embodiments of the present application, referring to Fig. 8, among all the electrode plate portions 11, for an electrode plate portion 11 having the barrier 112, there is stacked at least one electrode plate portion 11 not having the barrier 112 on each of two opposite sides in the thickness direction X of the electrode assembly 1.

The electrode plate portion 11 not having the barrier 112 means that the current collector 111 of the electrode plate portion 11 is not the barrier 112, which means that the ratio of the thermal conductivity and the thickness of the current collector 111 does not satisfy the condition of being less than $3 \times 10^7$ W/(K*m$^2$) or the ratio does not satisfy the condition of $1 \times 10^7$ W/(K*m$^2$).

The fact that for an electrode plate portion 11 having the barrier 112, there is stacked at least one electrode plate portion 11 not having the barrier 112 on each of two opposite sides should be understood as meaning that: the electrode plate portion 11 having the barrier 112 is located inside the electrode assembly 1, and will not be located in the uppermost layer or the lowermost layer of the electrode assembly 1. When the electrode plate portion 11 having the barrier 112 is located inside the electrode assembly 1, the barrier 112 can effectively impede heat spreading on one side, reduce the capacity involved in the conversion of heat, cause the overall temperature maximum to be reduced, and prolong the time for the temperature to reach the maximum, thereby making the secondary battery 10 adjacent thereto less likely to experience thermal runaway.

In the same secondary battery 10, there may be one or more electrode plate portions 11 having the barrier 112. For ease of understanding, the electrode plate portion 11 not having the barrier 112 is denoted as A or B, and the electrode plate portion 11 having the barrier 112 is denoted as O, taking two adjacent secondary batteries 10 as an example.

Referring to Fig. 8, when there is only one barrier 112 in one secondary battery 10, the distribution thereof may be: AA...AAOAA...AA (the secondary battery 10 (left))|BB...BBOBB...BB (the secondary battery 10 (right)), wherein ... represents the same electrode plate portion 11 (e.g., A or B) in the center. In this way, regardless of whether the failure location is on the left side, or the right side, because of the presence of the barrier 112, a resistance is provided for heat transfer, which results in a slower temperature rise on the other side of the same battery cell, thus slowing down the speed of heat spreading; and at the same time, it also prolongs the time it takes for the temperature to reach its maximum value, which makes the adjacent secondary batteries 10 less susceptible to thermal runaway.

Referring to Fig. 9, when there are two barrier 112 in one secondary battery 10, the distribution thereof may be: A... AOA... AOA... A (the secondary battery 10 (left))|BB...BBOBB...BB (the secondary battery 10 (right)). At this point, the failure point may be located on the left side of the entire module, or on the right side, or in the middle. But again, it can slow down the rate of heat spreading.

This is designed to provide a resistance to heat transfer, which results in a slower temperature rise on the other side of the same battery cell, thus slowing down the speed of heat spreading; and at the same time, it also prolongs the time it takes for the temperature to reach its maximum value, which makes the adjacent secondary batteries 10 less susceptible to thermal runaway.

According to some embodiments of the present application, referring to Fig. 9, at least two current collectors 111 are configured as the barriers 112, and there is stacked at least one electrode plate portion 11 not having the barrier 112 between two adjacent electrode plate portions 11 both having the barrier 112.

The fact that there is stacked at least one electrode plate portion 11 not having the barrier 112 between two adjacent electrode plate portions 11 both having the barrier 112 indicates that there is at least one normal electrode plate portion 11 between the two barrier 112, so that if the failure point is present between the two barrier 112, it is possible to effectively hinder the transfer of heat to the two sides.

This is designed to achieve effective thermal resistance to different failure points, thus making it difficult for heat to spread effectively.

According to some embodiments of the present application, please refer to Fig. 4, each electrode plate portion 11 further comprises an active layer 113. The active layer 113 is disposed on at least one side face of the current collector 111.

The active layer 113 refers to an active material coated on the current collector 111, the material of which may be determined based on the polarity of the electrode plate portion 11. For example, the material of the active layer 113 of the positive electrode may be, but is not limited to, lithium cobalt oxide, lithium manganate, lithium nickelate, lithium iron phosphate, ternary material, and the like. The material of the active layer 113 of the negative electrode may be, but is not limited to, graphite, lithium titanate, silicon oxide, and the like. Among them, the active layer 113 may be provided on one side face of the current collector 111, or may be provided on two opposite side faces of the current collector 111, respectively.

The active layer 113 is provided on the current collector 111 to ensure the capacity of the active material of the electrode assembly 1.

In order to make the purpose, technical solution and advantages of the present application more concise and clear, the present application is illustrated with the following specific embodiments, but the present application is by no means limited to these embodiments. Embodiments described below are only the preferred embodiments of the present application and may be used to describe the present application and are not to be construed as limiting the scope of the present application. It should be noted that any modifications, equivalent substitutions, improvements, etc., made within the spirit and principles of the present application shall be included in the scope of protection of the present application.

In order to better illustrate the present application, the contents of the present application are further described below in connection with the embodiments. The following are specific embodiments.

The thermal conductivity indicates the amount of heat transferred through an area of 1 square meter in 1s for a 1m thick material with a temperature difference of 1K between two side faces, which is in units of W/(m*K). The measuring of the specific thermal conductivity can be performed with reference to the standard ASTM D5470; and the value can be obtained with a thermal conductivity tester.

The method of measuring the thickness is as follows: taking an electrode assembly 1, detaching the electrode plate portion 11, washing away the active layer 113 on the surface by NMP, measuring the thermal conductivity of the current collector 111, and obtaining the thickness using a micrometer.

The method of measuring the elasticity modulus of the substrate is as follows: performing an anti-pressure strength test of the foil with reference to the HB5280-96 standard.

Comparative Embodiment 1

Taking the stacked type electrode assembly 1 as an example, a negative electrode plate portion 11 of a 30-layer common copper current collector 111, a positive electrode plate portion 11 of a 32-layer common aluminum current collector 111, and a 38-layer insulating portion 12 are alternately stacked to form an electrode assembly 1 of a target capacity, which is denoted as Sample 1.

Embodiment 2

Sample 1 is taken, and one layer of positive electrode plate portion 11 and one layer of negative electrode plate portion 11 in the center are replaced with a barrier 112 of low thermal conductivity, and re-stacked to form an electrode assembly 1 of the same capacity, which is denoted as Sample 2, wherein the barrier 112 may be made of austenitic stainless steel, with a thickness of 5 um.

Embodiment 3

The positive electrode plate portion 11 coated with the 30-layer barrier 112 of low thermal conductivity, the negative electrode plate portion 11 coated with the 32-layer barrier 112 of low thermal conductivity, and the 38-layer insulating portion 12 are alternately stacked to form the electrode assembly 1 of the target capacity, which is denoted as Sample 3.

The electrode assembly 1 is heated on one side (at a temperature of 105°C) and a temperature sensing wire is provided on the other side at the room temperature to monitor the temperature rise, and for the time for temperature rise, please refer to Table 1.

Table 1

|  | Sample 1 | Sample 2 | Sample 3 |
|---|---|---|---|
| Time for Temperature of 80°C | 75 min | 90 min | 150 min |

As can be seen from Table 1, the provision of the barrier 112 can effectively hinder the heat from spreading from one side to the other side, which is conducive to prolonging the time for temperature rise at an unfailed point. At the same time, the greater the number of layers of the barrier 112, the greater the thermal resistance, which can indirectly delay the rapid conversion of the capacity of the active material into heat and its dissipation.

The above Samples 1, 2 and 3 are separately assembled with an aluminum plastic film and sent to the test for nail penetration test. The depth of puncture of a 3-mm needle tip is 1/3 of the thickness of the electrode assembly 1. After a period of time of resting, the temperatures at the tab 4 and the back of the electrode assembly 1 are collected, and for details, please refer to Table 2.

Table 2

|  | Sample 1 | Sample 2 | Sample 3 |
|---|---|---|---|
| Resting time | 1h | 1h | 1h |
| Maximum temperature of at the back | 305 °C | 275 °C | 200 °C |
| Time corresponding to Maximum temperature | After resting for 8 min | After resting for 15 min | After resting for 30 min |

As can be seen from Table 2, the provision of the barrier 112 can effectively reduce heat transfer; and it can also prolong the time taken for the back of the electrode assembly 1 to reach the maximum temperature. Meanwhile, as the number of layers of the barrier 112 increases, the thermal resistance increases, which can effectively reduce the risk of heat spreading.

According to some embodiments of the present application, the present application provides a secondary battery 10 comprising an electrode assembly 1 of any of the above.

According to some embodiments of the present application, the present application provides a battery comprising a secondary battery 10 of any of the above.

According to some embodiments of the present application, the present application provides an electrical apparatus comprising a battery of the above, the battery being used to provide electrical energy.

According to some embodiments of the present application, please refer to Figs. 4 to 9, the present application provides an electrode assembly 1. A material with low thermal conductivity (one or more of bronze, iron, stainless steel, and tin) serves as a current collector 111 of the electrode plate portion 11, that is, a barrier 112. The thermal conductivity of the barrier 112 is less than 100 W/(K*m), and relative to the copper-aluminum substrate, such time interval for the spreading is increased by a factor of 3 to 4. The heat at the position that fails first, after being transferred externally, has a minimal effect on the temperature increase. At this point, it is possible to reduce the maximum temperature of the entire secondary battery 10 to 180°C to 220°C. At the same time, this barrier 112 of low thermal conductivity can prevent the heat from being transferred along the thickness direction X. Then, a certain temperature difference is formed between the left side of the electrode plate portion 11 and the right side of the electrode plate portion 11, which indirectly slows down the rapid conversion of the capacity of the right side into heat and its dissipation, and decreases the effective active material of which the capacity is converted into energy per unit time. In addition, the barrier 112 may be a single substrate or a multi-layered composite substrate.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

**Claims**

1.    An electrode assembly (1), comprising:

    several electrode plate portions (11) sequentially arranged in a laminated manner along a thickness direction (X) of the electrode assembly (1), each of the electrode plate portions (11) comprising a current collector (111); and
    an insulating portion (12), the insulating portion (12) being arranged between any adjacent two of the electrode plate portions (11),
    wherein at least one said current collector (111) is configured as a barrier (112), the thermal conductivity of the barrier (112) in the thickness direction (X) of the electrode assembly (1) being denoted as $\lambda 0$, and the thickness of the barrier (112) being denoted as d0, with $\lambda 0/d0 < 3 \times 10^7$ W/(K*m2).

2.    The electrode assembly (1) according to claim 1, wherein the thermal conductivity $\lambda 0$ of the barrier (112) and the thickness d0 of the barrier (112) further satisfy the condition: $\lambda 0 \times d0 < 0.003$ W/K.

3.    The electrode assembly (1) according to claim 2, wherein $\lambda 0 \times d0 < 0.001$ W/K.

4.    The electrode assembly (1) according to any one of claims 1-3, wherein the thermal conductivity $\lambda 0$ of the barrier (112) and the thickness d0 of the barrier (112) satisfy the condition: $\lambda 0/d0 < 1 \times 10^7$ W/(K*m2).

5.    The electrode assembly (1) according to any one of claims 1-4, wherein the material of the barrier (112) comprises at least one of bronze, iron, stainless steel, or tin.

6. The electrode assembly (1) according to any one of claims 1-5, wherein the thickness d0 of the barrier (112) satisfies the condition: $3\ \mu m \leq d0 \leq 20\ \mu m$.

7. The electrode assembly (1) according to claim 6, wherein the thickness d0 of the barrier (112) further satisfies the condition: $3\ \mu m \leq d0 \leq 10\ \mu m$.

8. The electrode assembly (1) according to any one of claims 1-7, wherein the barrier (112) comprises at least one main body layer (1121), the thermal conductivity of the main body layer (1121) in the thickness direction (X) of the electrode assembly (1) being denoted as $\lambda 1$, and the thickness of the main body layer (1121) being denoted as d1, with $\lambda 1/d1 < 1 \times 107\ W/(K*m2)$, and with the sum of the thicknesses d1 of all the main body layers (1121) being less than or equal to d0.

9. The electrode assembly (1) according to claim 8, wherein the barrier (112) further comprises an auxiliary layer (1122) stacked on at least one side face of the main body layer (1121), the thermal conductivity of the auxiliary layer (1122) in the thickness direction (X) of the electrode assembly (1) being denoted as $\lambda 2$, with the thermal conductivity $\lambda 1$ and the thermal conductivity $\lambda 2$ satisfying the condition: $\lambda 2 < \lambda 1$.

10. The electrode assembly (1) according to any one of claims 1-9, wherein the elasticity modulus of the barrier (112) is denoted as E0, $E0 \times d0 \geq 500\ GPa*\mu m$.

11. The electrode assembly (1) according to any one of claims 1-10, wherein, among all the electrode plate portions (11), for an electrode plate portion (11) having the barrier (112), there is stacked at least one electrode plate portion (11) not having the barrier (112) on each of two opposite sides in the thickness direction (X) of the electrode assembly (1).

12. The electrode assembly (1) according to claim 11, wherein at least two said current collectors (111) are configured as the barriers (112), and there is stacked at least one electrode plate portion (11) not having the barrier (112) between two adjacent electrode plate portions (11) both having the barrier (112).

13. The electrode assembly (1) according to any one of claims 1-12, wherein each of the electrode plate portions (11) further comprises an active layer (113), the active layer (113) being disposed on at least one side face of the current collector (111).

14. A secondary battery (10), comprising an electrode assembly (1) according to any one of claims 1-13.

15. A battery pack (100), comprising a secondary battery (10) according to claim 14.

16. An electrical apparatus, comprising a battery pack (100) according to claim 15, the battery pack (100) being used to provide electrical energy.

FIG. 1

**FIG. 2**

**FIG. 3**

FIG. 4

**FIG. 5**

112

d0    d1    d2

1121

1122

1121

**FIG. 6**

112

1122

1121

1122

**FIG. 7**

10

10

111(11)   111(11)   112(11)   111(11)   111(11)   111(11)   112(11)   111(11)

## FIG. 8

10

10

111(11)   112(11)   112(11)   111(11)   112(11)   112(11)   111(11)

## FIG. 9

## INTERNATIONAL SEARCH REPORT

| | International application No. |
|---|---|
| | **PCT/CN2022/125062** |

**A. CLASSIFICATION OF SUBJECT MATTER**

H01M4/64(2006.01)i;H01M4/66(2006.01)i

According to International Patent Classification (IPC) or to both national classification and IPC

**B. FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 集流体, 热, 传导, 阻隔, 壁垒, 导热率, 导热系数, 刺穿, 复合, 多层, 铜, 铁, 不锈钢, collector, thermal, heat, transfer, conductivity

**C. DOCUMENTS CONSIDERED TO BE RELEVANT**

| Category* | Citation of document, with indication, where appropriate, of the relevant passages | Relevant to claim No. |
|---|---|---|
| X | CN 111180737 A (NINGDE CONTEMPORARY AMPEREX TECHNOLOGY CO., LTD.) 19 May 2020 (2020-05-19) description, paragraphs [0002]-[0177], and figures 1-5 | 1-16 |
| X | CN 105742566 A (NINGDE CONTEMPORARY AMPEREX TECHNOLOGY CO., LTD.) 06 July 2016 (2016-07-06) description, paragraphs [0004]-[0082], and figures 1 and 2 | 1-16 |
| X | CN 115004403 A (PANASONIC HOLDINGS CO., LTD.) 02 September 2022 (2022-09-02) description, paragraphs [0019]-[0062], and figures 1-4 | 1-7, 10-16 |
| X | CN 105612652 A (NISSAN MOTOR CO., LTD.) 25 May 2016 (2016-05-25) description, paragraphs [0026]-[0096], and figures 1-7 | 1-7, 10-16 |
| A | EP 3279981 A1 (LITHIUM ENERGY & POWER GMBH & CO., KG) 07 February 2018 (2018-02-07) entire document | 1-16 |
| A | JP 2018063872 A (TOYOTA MOTOR CORP.) 19 April 2018 (2018-04-19) entire document | 1-16 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **11 May 2023** | **04 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/125062**

| Patent document cited in search report | | | Publication date (day/month/year) | Patent family member(s) | | | Publication date (day/month/year) |
|---|---|---|---|---|---|---|---|
| CN | 111180737 | A | 19 May 2020 | WO | 2020238225 | A1 | 03 December 2020 |
| | | | | US | 2021151770 | A1 | 20 May 2021 |
| | | | | KR | 20210003227 | A | 11 January 2021 |
| | | | | JP | 2020198290 | A | 10 December 2020 |
| | | | | EP | 3796438 | A1 | 24 March 2021 |
| | | | | EP | 3796438 | A4 | 01 September 2021 |
| CN | 105742566 | A | 06 July 2016 | CN | 105742566 | B | 08 May 2018 |
| CN | 115004403 | A | 02 September 2022 | WO | 2021153290 | A1 | 05 August 2021 |
| | | | | EP | 4099430 | A1 | 07 December 2022 |
| CN | 105612652 | A | 25 May 2016 | JPWO | 2015033665 | A1 | 02 March 2017 |
| | | | | JP | 6128225 | B2 | 24 May 2017 |
| | | | | KR | 20160044583 | A | 25 April 2016 |
| | | | | KR | 101777526 | B1 | 11 September 2017 |
| | | | | WO | 2015033665 | A1 | 12 March 2015 |
| | | | | US | 2016218544 | A1 | 28 July 2016 |
| | | | | US | 9906060 | B2 | 27 February 2018 |
| | | | | EP | 3043413 | A1 | 13 July 2016 |
| EP | 3279981 | A1 | 07 February 2018 | None | | | |
| JP | 2018063872 | A | 19 April 2018 | None | | | |

Form PCT/ISA/210 (patent family annex) (July 2022)